# EUROPEAN PATENT APPLICATION

(11) **EP 1 024 449 A1**
(43) Date of publication of application: **02.08.2000**
(21) Application number: 99810073.9
(22) Date of filing: 28.01.1999
(51) Int. Cl.: G06F 17/60

(54) **Real-time coordinating system**

(71) Applicant: International Business Machines Corporation, Armonk, NY 10504 (US)
(72) Inventor: Liver, Beat, 8134 Adliswil (CH)
(74) Representative: Ritscher, Thomas, Dr.Rer.Nat.Dipl.-Chem.

(57) **Abstract**

A real-time coordinating system comprises at least one device for data input by at least one user (3); at least one data output device for interfacing with said at least one user; and a program for personal active coordination by pervasive computing including: an intelligent integrator for input and output control and coordination of at least three policy parameters for data received and sent; and a mobile computing means (4) including: at least one open distributed synchronized calendar means for integrating and synchronizing a plurality of data streams fed into said computing means; said calendar means being receptive to at least one time-line segment for defining a time span during which said input and output control and coordination for data received and sent is effective.

## Description

### Background of the Invention

The present invention generally relates to electronic data communication and specifically to a real-time coordinating system.

At present, coordination of all or most activities of an individual is becoming more complex and important as the information age with its virtualization of business and society proceeds; the task of synchronizing a plurality of distributed electronic agendas (e.g. those at work and those at home) is cumbersome, and - in today's practice - most decisions must be made without proper coordination.

### Prior of the Art

Generally, process re-engineering and work-flow management aims to improve the coordination in business and government Such coordination considers the perspective of a whole organization but not that of the human individuals. Further, these approaches are appropriate for well structured processes, but not for informal ones. For example, computer-supported collaborative work tools, such as organizers and calendars (e.g., Microsoft® Exchange Lotus® Notes) treat employee calendars as corporate resources, i.e., the domain of these systems is the corporation

From the US 5,790,974 a portable calendaring device having perceptual agent managing calendar entries is known. This personal calendaring system includes a portable calendaring system and a complementary office calendar system, each synchronizing calendar entries by two-way wireless transmission.

However, a member of a corporation belongs to several "communities" or life environments of which the corporation is but one, and coordination of activities in a variety of such life environments is a hitherto unsolved task and, to the best of applicants knowledge, no practical system exists that allows real-time coordination of agendas operating in a plurality of computers and receiving input from a plurality of environments of human life.

### Objects of the Invention

Accordingly, it is a first general object of the invention to provide for real-time coordination of agendas operating in a plurality of computers and receiving input from a plurality of life environments.

Further, a more specific general object of the invention is to provide for the necessary extension of current calendars, or organizers, so as to be capable of enabling real-time coordination of such an agenda or organizers receiving input from a plurality of life environments for a person living in a plurality of life environments.

### Brief Summary of the Invention and Definition of Terms

These objects and further advantages of the invention are achieved, according to a general embodiment of the invention, by a real-time coordinating system comprising at least one device for data input by at least one user; at least one data output device for interfacing with said at least one user; and a program for personal active coordination by pervasive computing including: an intelligent integrator for input and output control and coordination of at least three policy parameters for data received and sent; a mobile computing means including: at least one open distributed synchronized calendar means for integrating and synchronizing a plurality of data streams fed into said computing means, said calendar means being receptive to at least one time-line segment for defining a time span during which said input and output control and coordination for data received and sent is effective.

The term "intelligent integrator" as used herin is intended to refer to a part of the program for personal active coordination by pervasive computing, which integrator is able to decide about accepting or refusing incoming events for a open distributed synchronized calendar according to policy parameters and time-line segments.

The term "computing means" as used herein is intended to refer to a hand-held mobile computer suitable for operation without connection to a physical line but capable of receiving and processing wireless input. Typical examples include Personal Digital Assistants (PDA) with wireless communication which achieve not only portability (for the owner), but provide continuous access to all users.

The term "calendar" is used synonymously herein with the term "organizer" and is intended to refer to an electronic data-processing program capable of correlating events with time.

As will be apparent from the above "pervasive computing" is a core issue of the invention since it is capable of eliminating the causes of the limitation of prior art system; thus, according to the invention, distributed agendas or calendars can be run as mobile distributed system in a manner enabling real-time coordination.

Such pervasive computing enables semi-automatic policy-based calendar decision making, e.g. conflict resolution, re-scheduling, and similar tasks. Thus, a real-time coordinator must be aware of the current situation of its user because of the context information provided by a whole network of pervasive computing devices.

### Detailed Discussion of the Invention

Generally, computer-supported collaborative work tools are intended to improve efficiency of coordination in a corporate environment. Currently, this can only be achieved by imposing the following company policy: the electronic agenda is readable by everybody; and everyone can schedule a meeting during free times.

Clearly, this is a very general approach that demands a particular behavior. More importantly, the approach is inappropriate for automating scheduling with parties not belonging to the same organization.

Pervasive computing, on the other hand, offers the opportunity to overcome the above-mentioned limitations of the current coordination tools and enable individuals to take full control of coordination processes impacting them.

For this purpose, computing means according to the invention, also termed Personal Active Coordinators (PAC) or open distributed synchronized calendar (SynCal) are provided which are based, according to the invention on the following features:
- relieving the human PAC user from coordination decisions that a computer can make, for instance, determining that the proposed date for an appointment conflicts with an already scheduled meeting;
- providing (on request) process status information to other agents (humans, computers including applications of the PAC user) that are involved. This is possible, because, coordination (with respect to one party, e.g., the owner of a PAC) depends on several factors: the situation of the user which is determined by external social and physical (natural and human designed) events and internal events (e.g., changing of mind). Pervasive computing measures external events Internal events, unless they are habits or medical conditions, are difficult to detect;
- goals, tasks and habits (e.g. picking up, the newspaper on the way to work). A good approximation of goals and tasks are provided by agendas, organizers, and project planners.
User modeling (based on pervasive computing) makes it possible to capture habits. For this purpose, the PAC according to the invention provides the following functionality:
- Open Distributed Coordination Information System: Calendars, organizers, work-flow management systems, and other applications contain coordination information which must be integrated and put at the disposal of PAC. When used in conjunction with a PDA , PAC is available to its owner (and users) anywhere anytime.
- Automated Coordination Decision Support: For instance, PAC attempts to resolve as many requests as possible for meetings automatically based on the calendar, policies (with regards to time, the priority of the meeting and the inviting party, and so on), and the situation of the user, e.g., if stuck in a traffic jam, so that she/he is unable to make it).

Obviously, it is essential to leave the user in control so that an adequate human-computer interface is required. The man-machine interface not only should support coordination of decision making but also manage the distributed system (PAC) and policies including privacy.

### Detailed Description of Preferred Embodiments and Elements of the Invention

### Open Distributed Calendar System Architecture

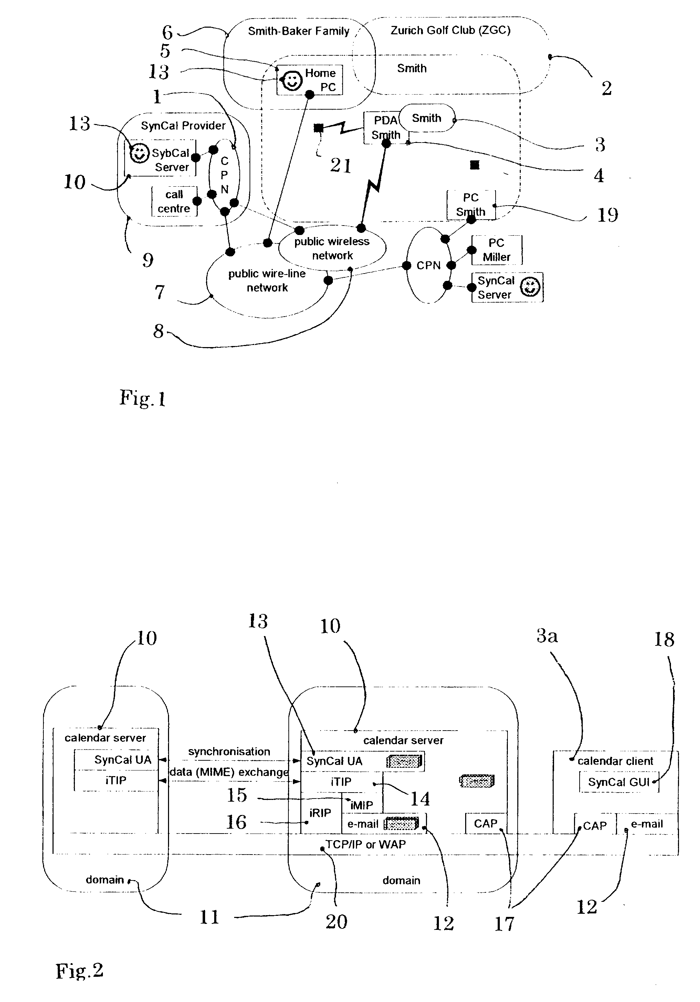

The core component of a PAC according to the invention is an open distributed synchronized calendar (termed SynCal herein for short).
The basic idea is the following: Relieving the human SynCal user from coordination decision that a computer can make. Providing process status information to other involved actors (humans and computers). The required automated reasoning depends on:
- The situation of an actor. It is determined by external social and physical (natural and human designed) events and internal events (e.g., changing of mind). Pervasive computing provides external environment information in addition to real-time coordination for mobile actors. Internal events, unless they are habits or medical conditions, are difficult to detect.
- Goals and tasks and habits (e.g, picking up the newspaper on the way to work). A good approximation of goals and tasks are provided by agendas, organizers, and project planners. User modeling (based on pervasive computing) makes it possible to capture habits
The SynCal overall system architecture is depicted in figure 1. This figure is showing all the components for a Mr. Smith, an actor in the following running example.

Open Distributed Coordination System: The architecture assumes a telecommunication infrastructure consisting of a wire-line 7 and wireless 8 public network connecting the different Syncal domains. Some domains have their own infrastructure, i.e., SynCal Provider 9, including a network, i.e., Customer Premise Network 1 (CPN). Others, like the Zurich Golf Club 2 (ZGC), are virtual domains, because their members provide the necessary infrastructure. For instance, Smith 3 uses a PDA 4 and a home PC 5 for the ZGC. figure 1 illustrates that the personal domain is overlapping with other domains, i.e., with a Smith-Baker family 6, because of the mobility of the actor. To summarize, a calendar of one actor is a distributed calendar in SynCal which does not exclude that a calendar containing all entries associated with one person might be kept at some locations.

Figure 2 shows the application architecture of SynCal. In this figure 2, SynCal extends an existing calendar application, which consists of calendar servers 10 (which is also called SynCal Server 10 in figure 1) and calendar or SynCal clients 3a, of which Mr. Smith 3 in figure 1 is one, that are tightly integrated. In general, such a tight integration is not required as explained below. Each server defines a calendar and SynCal domain 11. Note that a calendar client 3a might access its calendar domain remotely (which is not depicted in figure 1).

SynCal or Calendar Servers 10: SynCal is a multi-actor system, because it is an additional module to an existing calendar system that uses in turn an electronic mail system 12. SynCal needs an interface to read and write the actor's calendar and mailbox These interfaces are used by SynCal User Agents (UA) 13, each of which acts on behalf of one actor within one domain. An UA is a demon, because ft runs independently of whether its actor is logged in. In figure 1, Smith 3 has an UA (depicted as a similey) running on the home PC 5 and the SynCal servers 10 of his employer and SynCal service provider 9.

Well suited for a SynCal implementation is the Lotus eSuile®, because it provides a calendar (as included in the Lotus SmartSuite®) that supports a emerging interoperability standard iCalendar. The iCalendar set of standards addresses the interoperability of calendars by defining the elements of calendars and iCalendar Transport-Independent Interoperability-Protocol 14 (iTIP), an application protocol. Note that iTIP 14 provides no policy means to synchronize multiple agendas automatically. iTIP 14 uses either store-and-forward (iMIP - iCalendar Message-based Interoperability Protocol 15) or real-time (iRIP iCalendar Real-time Interoperability Protocol 16) connectivity. A iCalendar server 10 communicates with its clients via the Calendar Access Protocol 17 (CAP) which provides interoperability between server 10 and clients 3a form different vendors.

### SynCal Clients

A Syncal Client 3a provides the necessary Graphical User Interfaces 18 (GUI) for an actor. These GUis should be integrated into the used calendar and e-mail system 12, because it is, among others, possible to display the domains of origin of calendar events. In principle, it is also possible to provide separate GUIs 18 and mark the entries otherwise (by, e.g., including appropriate texts). In particular, it is assumed that SynCal Clients 3a are available on Personal Digital Assistants 4, figure 1 (PDA) with wireless communication interfaces, so that the whole SynCal is available to its owner (and other users) anywhere anytime. This enables real-time coordination, which goes beyond portability already valued by users. In figure 1, Smith 3 has a SynCal Client on his PDA 4 as well as home 5 and office PC 19.
Furthermore, it is assumed that a PDA 4 provides a global and local communication interface (using, e.g., GSM and infrared, respectively). The former connects the PDA to his SynCal service provider 9. The latter to other pervasive devices (e.g., position and access control beacons that are depicted as blue squares). In addition, a domain might also provide connectivity to the local calendar and the SynCal service provider 9 over the local communication interface: For instance, IBM® Research might allow Smith 3 to save costs by connecting his PDA 4 to his local SynCal UA that has also wire-line 7 connectivity to his UA at home and the SynCal service provider 9. Note that the UA at home is available only if the PC 5 is running.

The PDA 4 with a wireless communication interface 8 could he either a PalmPilot® with a radio modem (which is available in the U.S.) or a GSM communicators in combination with a Wireless Application Protocol 20, figure 2 (WAP). WAP 20 is attractive, as it probably minimizes the additional middle-ware for SynCal. In figure 2, WAP 20 is shown as a network protocol in addition to TCP/IP. Note that the reality is more complicated, as WAP requires gateways and is running on a different network.

### Advanced User Modeling Based on Pervasive Computing

SynCal is using a whole network of information sources to determine the current situation of the human user. information is gathered via personal area networks, smart rooms and appliances, and so off. In general, the local communication interface of a SynCal Client provides context information from local artifacts, like access control systems, coffee machines, payment systems, watches and cellular phones with Global Positioning System (GPS) functionality, and so on. In figure I, Smith's PDA 4 obtains the current geographical position from beacons 21 (depicted as filled squares) in buildings. This functionality is related to profiling, but the profiling (and in particular privacy) is controlled by the person profiled.

### Selected Use Cases

SynCal supports, for instance, the following use cases, some of which involve other pervasive computing devices:
- A thinking tag, a kind of active badge, provides viewer-specific information about its wearer. In combination with SynCal, a thinking tag would take into account the agenda: For instance, it might signal that its wearer, a participant in a congress, is going to an appointment. It might signal managing-by-walking-around to encourage employees to approach its wearer. Thinking tags are also important information sources for SynCal. For instance, a thinking tag passes the identity of the current discussion partner to the SynCal. In case this person is a higher-ranked manager, the SynCal would inform the peer's SynCal of a late arrival. The peer would wait without anger, as he knows that this manager is very important for the success of their joint project.
- Cyberguides provide customized explanations about the environment, in particular travel information SynCal's agenda information would ensure that the cyberguide, for instance, indicates which sight-seeing is possible within the available time (e.g., before the bus departs).
- The intelligent refrigerator of the future orders milk, eggs, and so on automatically. To be useful, such appliances have to take into account special cases, like holidays. The necessary information for these decisions are provided by SynCal. A less futuristic application is the intelligent routing of information and telecommunication sessions, for which SynCal is also a key knowledge source.
- Couriers, like Federal Express® and UPS®, offer delivery tracking but not delivery control The latter would be useful, if a recipient moves (to a different location) prior to the delivery (of, for instance, flowers).The courier's delivery management system could inform the recipient SynCal, which in turn would notify the courier if his owner moves. Such delivery routing control processes should usually take place without human interventions. In case, the recipient's SynCal denies to inform the courier, the courier would then try to obtain the delivery destination from the sender's SynCal, to which the recipient might provide the requested location information.
- An author is interested in tracking the status of the section written by a collaborator to plan his own tasks and to manage the whole project. Defining a work-flow or checking the status of document is often too expensive, whereas asking disturbs the collaborator. Privacy concerns demand a much finer granularity of access control than provided by today's systems. Furthermore, it needs sophisticated negotiation support and an adequate human-computer interface. For instance, automating this coordination should require minimal human effort. Both parties should be kept informed about the status of their collaboration process in a non-intrusive way that does not result in an information overload.

The objective of SynCal is to allow a person to carry out and control all his coordination activities. SynCal is telecommunication intensive, i.e., SynCal needs SynCal support services. These services arc e-products, for which the provider needs operation support tools (e.g., delivery systems and supply chain management systems to produce services with the necessary quality) and management tools (including service delivery systems that allow customers to track and control fulfillment). SynCal is cutting across organizational boundaries and traditional information systems and, hence, it is an example of the new breed of dynamic distributed systems that are addressing the virtualization of human activities and e-business needs.

### Automating Synchronization and Coordination

In the following, the algorithms using the architecture defined above. Automating synchronization and coordination can be decomposed into the following three sub-tasks:
( 1 ) An UA forwards an event (e.g., environment events and scheduling request, like Calendar Request messages) to the UAs (of other domains) that have to be informed and process this kind of events. An event class might be forwarded immediately, at scheduled time, depending on a situation, depending on some optimization criteria (e.g., cost, utility), or not at all. The particular forwarding policies determine the overall content of an actor's distributed calendar: for instance, forwarding all events to all calendar domains of an actor results in a full replication of all calendar entries.
(2) An UA processes events based on admission policies semi-automatically, i e., an actor's UA attempts to resolve as many requests as possible automatically based on the calendar, policies (with regards to time, the priority of the meeting and the inviting party, and so on), and the situation of the user (e.g., if she is stuck in a traffic jam, so that she is unable to make it). It is crucial to leave the human user in control, for which an adequate human-computer interface Is required. For instance, an event type might override the policy that private events are not accepted during business hours. During the sick leave event, invitations for business events are turned down automatically.
(3) An UA processes events obtained from subscriptions to pull or push environment event detection services (e.g., geographical location including building and computer access). This involves understanding the importance of an event with respect to calendar (e.g., current location is too far away to reach a meeting place). For each knowledge source, R is necessary to represent meaning the events have with respect to the calendar. Ideally, this information would be encoded in ontologies (e.g., about events, about locations, and so on). It is assumed that a developer interface exists for tins purpose.

### Basic Calendar Information Model

Before introducing the concepts required for SynCal, the most important entitles an information model like it is used usually for calendar applications is described. After this description, this information model is enriched with the concepts specific to SynCal. These concepts allow then to describe the algorithms of SynCal.

A Calendar contains Information Objects and Calendar Domains, each of which contains Actors. Actors are either Persons or Agents. Each Actor plays one or more Roles, one of which is Owner. All Information Objects have at least an Owner. Information Objects arc either Local Calendars (i.e., calendar databases that might be replicated), Documents, Events, and Policies. A Local Calendar contains Events (e.g., scheduling requests, meetings, an so on) that might have associated Documents. Each Document has its Document Classification.

### SynCal Information Model

The basic calendar information model is extended for SynCal. This extension consists of the time-line segment and policy related concepts. The latter include the policies Admission, Synchronization, and Projection. These concepts and their use to achieve unique functionality of SynCal are explained in the following:

### Sub-classing of Information Objects

Providing common terminology and enforcing standards across an organization is important. For this purpose, object classes of SynCal's Information Model (in particular Information Objects) can be sub-classed (i.e., multiple inheritance is supported). To enforce company rules, SynCal allows administrators of calendar domains to hide the (root) classes. This implies that a calendar belongs to a calendar domain, which represents a community. A corporate-wide rule might specify that confidential information (e.g., notes associated with calendar entries, entry descriptions, and so on) shall be kept within the premise

The resulting global distributed Information Model is not available as such in general, but each Domain can export its specialization and import Information Object classes from other Domains. Exchanging specialized Information Objects between Domains requires either an appropriate Mapping or an Import of the relevant object classes. An Import requires an Export that specifies each exported Information object class and the to be applied Projection. For instance, Smith could import the IBM® Research Events to the Smith-Baker Family. IBM® Research specifies what Information Objects and what slots can be imported (by which Domains) in an Export. It is expected that sub-domains import the specialization of their domains in general. For instance, IBM® Research imports the specific Information Objects of the IBM® Domain. For handling theses distributed object classes, SynCal adopts well known solutions (that satisfy the specific needs) from other application domains. For instance, a global Dictionary might be available.

### Time Line Segments

A Time Line Segment (TLS) defines a set of recurring time intervals, whereas the set of TLSs associated with one SynCal user do not overlap. Note that this association enables a user to manage his time. All time points not belonging to a TLS are included in the Default TLS, so that the closed-world assumptions holds. Last but not least, a TLS might be derived from a project planner or another information source (by the user modeling component of SynCal): In the former case, the actual or scheduled execution of a particular project task defiles a TLS.

The basic idea of TLS is to enable a calendar user to specify how to handle events failing in the TLS. It is important that a TLS is associated with a Domain, because the handling of an event depends not only on the TLS but also on the Domain of the TLS and event. For instance, a user might define a time at the office during which she rejects all kinds of interrupts. In particular, this would prevent meetings and incoming phone calls (assuming that the telephone uses SynCal to route calls).

### Policies

A Policy defines how to handle different classes of events (calendar events or external events). This depends either on the Domain in which a person is active in a particular role during the relevant time interval and (Oil the Event itself. For instance, the business calendar contains mostly entries within business hours. Furthermore, other events are, if possible, scheduled outside of these hours. But, the event of a case of death within the family has higher priority than the business calendar policy.
For ease of use, policies are associated with Events and TLSs. Consequently, it is necessary to determine which policy has to be applied. For this purpose, Policies are either classified as exclusive, additive, and so on. In case of exclusive policies, composition simply determines one policy, namely, the one with the highest priority. Priorities can be specified extensionally (by an acyclic graph) or intentionally (e.g., rank(invitee(M1) < rank(invitee(M2) → M1 < M2).

It is clear that it is possible to define very rich languages to define policies. Here, it is sufficient to state that such a language (based on an Information Model) exists. A rich language evolves over time and would greatly benefit from connections with common sense mechanical reassures, ontology servers, and so on.

In SynCal, a calendar applies the Admission Policy on each incoming or generated Event. This Policy determines how to handle the Event. For this purpose, the calendar uses, if necessary, the Projection and Synchronization Policy. The former maps an Information Object into another one. The latter specifies when to send an Information Object over what medium. These Policies are sufficient to automate synchronization and coordination, as described next.

### Projection Policy

A Projection defines what slots to remove from an Information Object. It is used to generate particular views of Information Objects to be either displayed or sent out. Each filtering rule is guarded by a Condition. The default Condition is the following: If the recipient's UserID does not belong to the Information Objects source Domain, the Projection associated with the target Domain (i.e., the user's source Domain) has to be applied In addition to slot-level filtering rules, a Projection can also specify a rule for a whole Event. In this case, the action part refers to a Mapping.

### Synchronization Policy

The Synchronization Policy describes when to send the information over what medium. As an input, it expects a destination, i.e., a User and a Domain. First it applies the appropriate Projection to ensure that the privacy and data protection considerations are taken into account properly. Then, it sends the result to the destination according to the policy associated with their destination and other information (like the geographical context, time of the day, etc.).

### Admission Policy

The following algorithm determines and executes the appropriate Admission Policy for semi-automatically responding to an incoming Event (i.e., one occurring or arriving at a calendar within a particular Domain):
(1) The TLS to which an Event belongs is computed based on the set of the TILS (defined in all Domains) of a user.
(2) If the incoming Event belongs to a TLS associated with the same Domain as the Event, this Domain has the right to decide without coordinating with other Domains. The above condition holds always for the Default TLS, because this TLS is associated with all Domains.
   (i) The partition of the Admission Policy associated with the TLS determined in Step (1) - an intentionally or extentionally specified set of Event classes - to which the Event belongs is determined. Note that there exists a default partition.
   (ii) The Admission Procedure and Resolution Procedure are set to the ones associated with either the Partition or the Event depending on their Admission Priority. The Admission Procedure for manual decision-making would simply ask the calendar owner to accept or reject an Invent. Here, the default Admission Procedure is defined, that curries out the following steps:
      (a) If the processed Event is in conflict with one or more scheduled Events, the Resolution Procedure is invoked. The default Resolution Procedure simply evaluates the Admission Priority associated with the involved Events in the context of the TLS: If the processed Event has a lower Priority its Reject Action is carried out. Otherwise, its Accept Action and revoke Action are carried out for the processed Event and the ones in conflict, respectively. It is distinguished between Binding and Informational Events: the former conflict among each other, whereas the latter never conflict (as they inform only).
      (b) Otherwise, the Admission Action is carried out. The default Admission Action is to add the Event to the Calendar.
(3) Otherwise, the Event has to processed in the appropriate Domain. For this purpose, it Is necessary to transfer the Event to the respective Domain. For instance, you might have delegated the business TLS to your secretary. If your husband is entering a doctor's appointment for you in your local Calendar at home, the admission procedure cannot be completed as the secretary is not known in this Domain. Therefore, the Event is forwarded to the business domain for handling. For this purpose, the following steps are carried out:
   (i) The originating Domain slot of the processed Event is set to the current Domain. This is necessary to determine the source of an Event and sending back the decision.
   (ii) The incoming Event is included in the specified Remote Decision Event, which is transferred to the other Domain according to its Synchronization Policy.
(4) At this point, the incoming Event has been processed. It this processing has not generated a new Event, the Synchronization Policy associated with the incoming Event is carried out.
For handling Environment Events, it is necessary to determine the relationship between them and calendar events (i.e., Binding and Informational Events). For instance, location events are related to the location of a calendar event. For instance, meetings would be classified into face-to-face (i.e., a specific location is given) and tele-meetings (i.e., a communication medium is given). In addition, it is necessary to define pattern-actions rules to be carried out for a patterns of environment and calendar events. Such rules can be described in the form of Admission Policies, which are very general. Assuming a Cyberguide, such a rule could determine whether the SynCal user arrives on time, needs to re-plan his trip, or has to reschedule.

## Claims

1. A real-time coordinating system comprising:
at least one device for data input by at least one user (3);
at least one data output device for interfacing with said at least one user; and a program for personal active coordination by pervasive computing including:
an intelligent integrator for input and output control and coordination of at least three policy parameters for data received and sent;
a mobile computing means (4) including:
at least one open distributed synchronized calendar means for integrating and synchronizing a plurality of data streams fed into said computing means;
said calendar means being receptive to at least one time-line segment for defining a time span during which said input and output control and coordination for data received and sent is effective

2. The real-time coordinating system of claim 1, wherein the device for data input is a server(10).

3. The real-time coordinating system of claim I or 2, wherein the data output device is a server (10).

4. The real-time coordinating system of claim 2 or 3, wherein the program for personal active coordination is running on the server (10).

5. The real-time coordinating system of claim 1 to 4, wherein the program for personal active coordination is running on the mobile computing means (4).

6. The real-time coordinating system of claim 1 to 5, wherein the policy parameters comprising a projection policy, a synchronization policy and an admission policy.
